# FASCICULE DE BREVET EUROPEEN

(11) **EP 3 122 689 B1**
(45) Date de publication et mention de la délivrance du brevet: **19.05.2021**
(21) Numéro de dépôt: 15718514.1
(22) Date de dépôt: 23.03.2015
(51) Int. Cl.: C02F 1/70, C02F 1/28, C02F 1/66, C02F 101/22

(54) **PROCÉDÉ DE TRAITEMENT DU CHROME PRÉSENT DANS DES EFFLUENTS ET INSTALLATION CORRESPONDANTE**
VERFAHREN ZUR BEHANDLUNG VON CHROM IN ABWÄSSERN UND ENTSPRECHENDE VORRICHTUNG
METHOD FOR TREATING CHROMIUM PRESENT IN EFFLUENTS, AND CORRESPONDING DEVICE

(30) Priorité: 28.03.2014 FR 1452713
(43) Date de publication de la demande: 01.02.2017
(73) Titulaire: MS Developpement Et Participations, 63960 Veyre-monton (FR); Université Blaise Pascal Clermont II, 63006 Clermont Ferrand Cedex 1 (FR); CNRS Centre National de la Recherche Scientifique, 75794 Paris Cedex 16 (FR); Ecole Nationale Superieure de Chimie de Clermont Ferrand, 63174 Aubiere Cedex (FR)
(72) Inventeur: BRIGANTE, Marcello, 63170 Aubiere (FR); CHAMPEAU, Benoit, 63114 Coudes (FR); GUILLAUME, Alexandre, 63122 Ceyrat (FR); MAILHOT, Gilles, 63000 Clermont-ferrand (FR); PRULHO, Romain, 63000 Clermont-ferrand (FR)
(74) Mandataire: Dennemeyer & Associates S.A.
(86) Numéro de dépôt international: PCT/FR2015/050719
(87) Numéro de publication internationale: WO 2015/145051

(56) Documents cités:
- FR-A1- 2 791 662
- US-A- 4 113 619
- XU X-R ET AL: "Reduction of hexavalent chromium by ascorbic acid in aqueous solutions", CHEMOSPHERE, PERGAMON PRESS, OXFORD, GB, vol. 57, no. 7, 1 novembre 2004 (2004-11-01), pages 609-613, XP004600778, ISSN: 0045-6535, DOI: 10.1016/J.CHEMOSPHERE.2004.07.031 cité dans la demande

## Description

La présente invention concerne un procédé de traitement du chrome présent dans des effluents ainsi qu'une installation correspondante.

Le terme effluent doit être compris comme désignant un liquide qui, lors de son émission, est chargé en particules et/ou en composés solubles dans l'eau. Ce liquide est, de facto, une solution aqueuse, même si d'autres solvants peuvent être présents, à l'état de trace. Un tel effluent est généré par des activités humaines, à savoir des activités industrielles, agricoles ou commerciales, cela dans tout domaine technique.

Le chrome est un métal de transition pouvant exister sous six états d'oxydation. Seuls le chrome de valence trois, noté Cr(III), et le chrome de valence six, noté Cr(VI), sont rencontrés à l'état naturel. Le chrome hexavalent forme le second état d'oxydation le plus stable, tout en étant rare à l'état naturel. Le chrome trivalent est considéré comme un oligoélément indispensable pour l'homme et non toxique à faible dose alors que le chrome hexavalent est un élément toxique. Il s'avère que le chrome, entre autres du fait de ses propriétés anticorrosion, est couramment utilisé dans plusieurs domaines d'activité humaine. En particulier, on l'utilise en métallurgie, tant dans la composition des aciers où il améliore la dureté et la résistance à la corrosion des métaux que dans le revêtement de surface. Le chrome est également employé dans la composition de briques réfractaires et dans l'industrie chimique, notamment dans le domaine du tannage du cuir, de l'industrie textile, des pigments, des colorants, des agents nettoyants et des adhésifs.

Ainsi, le chrome est susceptible d'être présent dans les effluents issus des différentes industries, du fait de la solubilité du chrome dans l'eau. Il s'avère que le chrome hexavalent, donc la forme potentiellement la plus toxique, est très soluble dans l'eau, à l'inverse du chrome trivalent qui est peu soluble dans l'eau et a tendance à se trouver sous forme solide, libre ou complexée, dans les effluents. Il existe donc un risque de retrouver du chrome trivalent et hexavalent dans les sols, en tant que tel pour le Cr(III), et par infiltration des eaux de surface provenant du traitement des effluents pour le Cr(VI). Il existe un risque de pollution des nappes phréatiques et, plus généralement, des eaux souterraines par le chrome hexavalent soluble, ce qui a un impact direct sur la santé publique.

De nombreux organismes gouvernementaux et/ou internationaux ont mis en place une réglementation visant à limiter les teneurs en chrome, généralement en chrome total, dans les eaux potables. D'autres règlementations apparaissent et visent à réduire la teneur en chrome dans les effluents rejetés par les industries, en distinguant les différents états d'oxydation du chrome. A titre d'exemple, l'arrêté du 26 novembre 2011, impose en France une teneur maximale de 0,1 mg/L en chrome total et une teneur maximale de 0,05 mg/L en chrome hexavalent dans les eaux rejetées dans le milieu naturel par les installations de production de béton, désignées couramment par l'expression « centrale(s) à béton ». Les effluents issus de la fabrication des bétons, du fait des tonnages produits, constituent une source importante de chrome. En effet, les effluents liquides-ou laitances-rejetés actuellement par les centrales à béton contiennent généralement de 0,1 mg/L à environ 0,5 mg/L de chrome hexavalent, provenant notamment des composés du béton, en particulier des ciments. On connait des procédés utilisés à l'échelle du laboratoire, tel celui décrit par Xu X-R et Al, J. CHEMOSPHERE, 2004.07.31, de réduction du chrome dans une solution aqueuse, non chargée en particules, de dichromate de potassium.

Il existe donc un besoin pour un traitement industriel des effluents permettant de réduire la teneur en chrome afin de limiter l'impact de cet élément sur le milieu naturel et sur la santé publique. On connait par FR-A-2 791 662 un procédé industriel de traitement d'effluents de tannerie, par électrochimie. On connait également des procédés industriels de précipitation basés sur la réduction du chrome hexavalent, très soluble et toxique, en chrome trivalent, moins soluble et peu toxique. Le document US 4,113,619 décrit un tel procédé.

A titre d'exemple, comme agents réducteurs, on peut citer l'utilisation du dioxyde de soufre (SO₂) et du bisulfite de sodium (NaHSO₃). Le fer zéro ou le fer(II) sont également utilisés. Les procédés employant de tels agents réducteurs ne sont pas ou peu envisageables à l'échelle industrielle. En effet, outre un temps de réaction élevé, ils nécessitent de travailler en milieu très acide, à un pH inférieur à 4, alors que le pH initial des effluents à traiter est très basique, généralement voisin de 12. De ce fait, une réduction du pH de 12 à 4 ou 3 nécessite une consommation importante d'agents d'ajustement du pH, tel qu'un acide, pour effectuer la réaction. De plus, un pH inférieur à 4, et qui plus est généralement voisin de 3, est incompatible avec un rejet direct des effluents une fois traités dans le milieu naturel, ce qui implique un second ajustement du pH jusqu'à un pH, si ce n'est neutre, d'au moins 5,5 selon la réglementation en vigueur, avant le rejet, d'où une surconsommation d'agents d'ajustement du pH. Par ailleurs, certains des produits employés et/ou des sous-produits générés dans ces procédés sont en eux-mêmes potentiellement toxiques et/ou difficiles à éliminer.

On connait d'autres procédés, par exemple, la bioremédiation, l'adsorption sur du charbon actif, la photocatalyse, qui ne sont pas d'un emploi aisé et/ou d'un coût maitrisé, ce qui ne permet pas un emploi à l'échelle industrielle.

On connait également par US-B-6 221 002 un procédé de réduction de la teneur en chrome hexavalent présent dans les sols qui utilise comme agent réducteur un acide organique faible, en l'espèce l'acide ascorbique. Si un tel procédé assure une diminution de la teneur en chrome hexavalent de plus de 90%, il nécessite un temps de réaction minimum compris entre une et quelques heures, incompatible avec un traitement rapide de plusieurs mètres cubes d'effluents liquides, qui plus est lorsqu'ils sont chargés en particules solides.

Dans ces conditions, l'invention vise à proposer un procédé de réduction de la teneur en chrome, en particulier en Cr(VI), dans les effluents qui permet de remédier aux inconvénients de l'art antérieur décrits ci-dessus.

A cet effet, l'invention a pour objet un procédé de diminution de la teneur en chrome, notamment en chrome hexavalent, présent dans un effluent liquide chargé en particules solides, dit effluent initial, comprenant au moins une étape de réduction par l'ajout à l'effluent initial d'un acide organique faible en quantité suffisante pour réduire le chrome hexavalent présent dans l'effluent initial à une valence inférieure, à savoir en chrome trivalent, ladite étape étant suivie d'une étape d'évacuation de l'effluent liquide ainsi traité dit effluent final, caractérisé en ce qu'il comprend au moins les étapes suivantes :
- ajuster le pH de l'effluent initial à une valeur proche de la neutralité, à savoir comprise entre 7 et 8,
- réaliser, préalablement à l'étape de réduction, une étape de collecte des particules solides présentes dans l'effluent initial, au moins par décantation,
- effectuer l'étape de réduction après ajustement du pH de l'effluent initial à une valeur du pH inférieure au pH initial de l'effluent initial tout en étant compatible avec une évacuation de l'effluent final à cette valeur de pH .

La Demanderesse a constaté de façon surprenante que l'ajout d'un acide organique faible tel que l'acide ascorbique comme agent réducteur en milieu faiblement acide à un pH, par exemple compris entre 5 et 7, permet de réaliser une réduction du chrome hexavalent contenu dans un effluent en un temps inférieur à 30 minutes. Il est ainsi possible de traiter un effluent en un temps compatible avec les contraintes industrielles, le temps de traitement étant alors assimilable à un temps de traitement en continu de l'effluent. Par ailleurs, le pH de l'effluent étant faiblement acide, le rejet de l'effluent final ainsi traité est possible, sans traitement complémentaire. De plus, l'utilisation d'un acide organique faible, ici l'acide ascorbique, n'entraine aucune dégradation potentielle des installations et ne génère pas de sous-produits polluants.

Selon des aspects avantageux mais non obligatoires de l'invention, un tel procédé peut comprendre une ou plusieurs des caractéristiques suivantes:
- l'acide organique faible est l'acide ascorbique et l'ajustement du pH est réalisé par de l'acide sulfurique.
- L'acide organique faible est l'acide ascorbique et l'ajustement du pH est réalisé par du gaz carbonique.
- L'ajustement du pH est réalisé de sorte que le pH de l'effluent final est compris entre 5,5 et 7.
- L'étape de décantation est suivie d'une filtration.
- Avant l'étape de réduction, l'effluent est homogénéisé.
- Après l'homogénéisation et avant la réduction, au moins une mesure de la teneur en chrome hexavalent et du pH est effectuée.
- Lors de l'étape de réduction, l'acide organique faible est associé à au moins un autre composé.
- Le composé associé à l'acide organique faible lors de l'étape de réduction est un coagulant.

L'invention a aussi pour objet une installation de mise en œuvre du procédé selon l'une des caractéristiques précédentes comprenant au moins une cuve dans laquelle la réduction d'un effluent initial est réalisée, un organe d'ajout d'un acide organique faible formant l'agent réducteur, l'organe d'ajout étant relié à ladite cuve, caractérisée en ce qu'elle comprend également au moins un organe d'ajustement du pH de l'effluent initial et au moins une cuve de décantation placée en amont de la cuve dans laquelle se fait la réduction.

Selon des aspects avantageux mais non obligatoires de l'invention, une telle installation peut comprendre une ou plusieurs des caractéristiques suivantes:
L'organe d'ajustement du pH est relié à la cuve de décantation.
- L'installation comprend au moins un organe de filtration tel qu'un filtre à sable ou à charbon actif.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
- la figure 1 est une représentation schématique d'une installation de mise en œuvre du procédé de l'invention, l'effluent initial à traiter comprenant deux phases, liquide et solide,
- la figure 2 est un schéma similaire à la figure 1, à la même échelle, illustrant un autre procédé dans lequel l'effluent initial n'a qu'une phase liquide,
- la figure 3 est un schéma similaire aux figures précédentes, à la même échelle d'un autre procédé et
- la figure 4 est une vue de dessus, simplifiée, d'une installation de mise en œuvre du procédé.

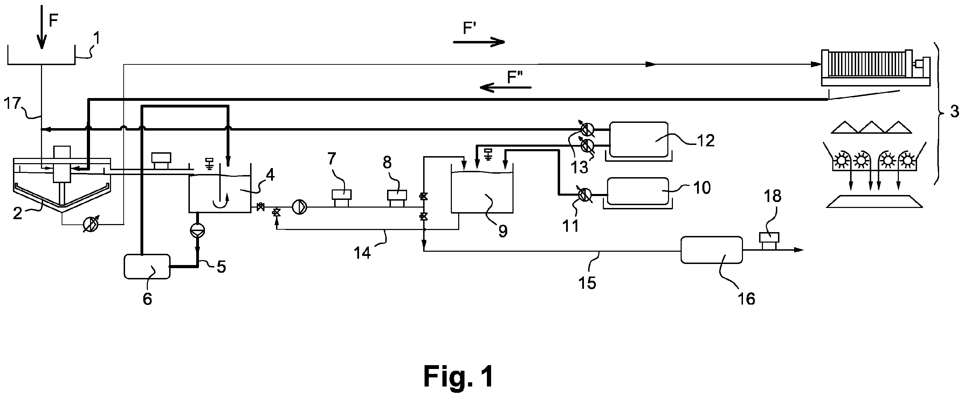

Ici, le mode de mise en œuvre de l'invention représenté à la figure 1 est celui d'un effluent fréquemment rencontré en sortie d'une installation de production industrielle. Un tel effluent est dénommé par la suite effluent initial. Il s'agit d'un liquide chargé en particules solides tel que, par exemple mais non exclusivement, un effluent issu de la production de béton, dans une installation dénommée par la suite centrale à béton, et couramment dénommé laitance. Un tel effluent comprend une phase aqueuse, formant la phase liquide dans laquelle se trouve, solubilisé, le chrome, essentiellement le chrome hexavalent ou Cr(VI) et une phase solide formée de particules de sable, de silice et d'autres composés du béton, non solubles dans l'eau. Le chrome trivalent ou Cr(III), peu soluble dans l'eau, est présent essentiellement dans la phase solide et se retrouve, au moins en partie, adsorbé sur les particules solides présentes dans l'effluent initial. Le procédé illustré à la figure 1 prévoit un traitement de la phase solide, afin de neutraliser cette dernière avant son évacuation ou son recyclage.

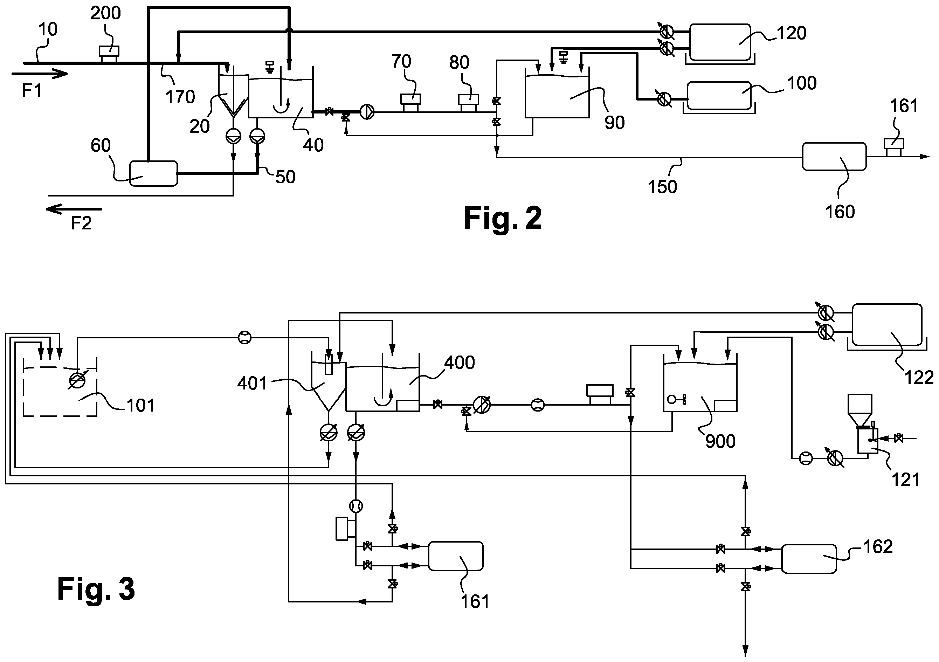

La figure 2 illustre un autre mode de mise en œuvre de l'invention correspondant au cas où l'effluent initial, issu également d'une installation de production industrielle, par exemple la production de béton, est peu ou pas chargé en particules solides. En d'autres termes, l'effluent initial, ici une laitance de béton, a déjà subi un traitement permettant de séparer les phases solide et liquide, par exemple mais non exclusivement une décantation. La phase solide est traitée de manière séparée, en vue de son évacuation ou de son recyclage. L'effluent initial est donc, dans ce cas, une laitance décantée. Par la suite, il sera désigné par l'expression effluent ou laitance décantée, un effluent dépourvu de particules solides même si la séparation des phases liquide et solide est réalisée par une autre technique que la décantation.

On conçoit que le procédé objet de l'invention s'applique à tout type d'effluent, au sens d'un effluent comprenant une phase aqueuse, chargé en chrome, autre que la laitance de béton et généré lors d'une activité humaine, qu'elle soit industrielle, agricole, pharmaceutique, chimique ou agroalimentaire. Par la suite, en référence aux figures 1 et 2, l'expression laitance initiale sera également utilisée pour désigner l'effluent initial, c'est-à-dire l'effluent non traité et chargé en chrome, que cet effluent comporte une seule phase aqueuse ou une phase solide et une phase aqueuse. Les expressions laitance finale et effluent final sont indifféremment employées pour désigner l'effluent final, c'est-à-dire débarrassé du chrome.

D'une manière générale, dans les modes de mise en œuvre de l'invention illustrés aux figures 1 et 2, les éléments solides, sont traités et neutralisés, par des méthodes connues en soi, avant leur évacuation ou leur recyclage.

Le procédé est maintenant décrit, dans un premier mode de réalisation, en référence à la figure 1. Dans ce cas, le procédé est mis en œuvre au niveau de la sortie des effluents dans une installation de production, dans l'exemple une centrale à béton, avant tout traitement de l'effluent initial, donc avant élimination des particules solides. On conçoit que le procédé peut soit être intégré dans une installation qui est partie intégrante d'une centrale à béton, soit être mis en œuvre dans une installation indépendante située en aval d'une centrale à béton. En d'autres termes, il est possible soit de concevoir une centrale à béton intégrant dès l'origine une installation de mise en œuvre du procédé soit d'équiper avec une telle installation une centrale à béton existante.

Dans une première étape, en référence à la figure 1, l'effluent initial, ou laitance initiale, chargé en particules solides, est amené sur l'installation de mise en œuvre de l'invention, à partir d'une sortie d'une installation de production, donc une centrale à béton, selon la flèche F, étant entendu qu'une telle sortie collecte également les eaux de lavage des diverse machines de la centrale à béton ainsi que les eaux de lavage des camions de transport du béton dits toupies. Afin de réaliser une alimentation régulière, la laitance arrive, de manière avantageuse mais non obligatoire, dans un bac d'alimentation 1, assurant un stockage temporaire de la laitance. Lors de cette étape, la laitance subit une décantation naturelle permettant de séparer les particules solides et la phase liquide. Pour cela, la laitance est introduite dans une cuve de décantation 2, connue en soi. Les particules solides tombent, par gravité, au fond de la cuve 2. A l'issue de la décantation, les boues, c'est-à-dire la phase solide, est collectée, selon la flèche F', et traitée, de manière connue en soi, pour être stabilisée avant une évacuation finale. La référence 3 est employée pour désigner dans sa généralité le traitement du filtrat. Les boues sont, par exemple, pressées. Les galettes ainsi obtenues sont compactes et aisément récupérables. Une étape supplémentaire de stabilisation, assimilable à un traitement final, permet un éventuel recyclage ou un enfouissement conforme à la réglementation en vigueur. Lors de ce traitement 3, une phase liquide ou filtrat et qui n'est plus-ou très peu-chargée en particules est réinjectée dans la cuve 2, pour être mélangée à la phase clarifiée, selon la flèche F".

Dans un autre mode de réalisation, il peut être envisagé d'effectuer une mesure de pH réalisée sur la laitance, avant sa décantation, à savoir en amont de la cuve 2. Une telle mesure de pH permet de connaitre le pH initial de la laitance initiale. Dans un autre mode de réalisation, lorsque l'effluent initial, par exemple d'origine industrielle, a une composition régulière et connue, cette mesure de pH n'est pas réalisée, ou du moins, pas systématiquement. Seul un échantillonnage périodique, permettant de contrôler la régularité de l'effluent, est alors effectué.

La phase liquide décantée, ou surnageant, est reprise et homogénéisée, par agitation dans une cuve 4 connue en soi, lors d'une étape suivante. Lors de cette étape, la phase liquide, de facto chargée essentiellement en chrome hexavalent solubilisé mais également en d'autres composés, est avantageusement maintenue à une température donnée, proche de la température ambiante, soit environ 20°C, selon les conditions optimales du procédé. Si besoin, un soutirage 5, partiel, de la laitance est effectué lors de cette étape et, via une pompe, dirigé vers un organe de filtration 6, par exemple, un filtre à sable. Le surnageant provenant de cette filtration est renvoyé dans la cuve 4. Ainsi, par l'organe de filtration 6, on élimine autant que possible les particules non solubles, de sorte à obtenir une solution clarifiée ne contenant que des composés solubilisés. Lors de ce soutirage, le chrome trivalent, Cr(III), non solubilisé et adsorbé sur les particules, est collecté dans le filtrat. En variante, on conçoit que l'on utilise plusieurs filtres 6 en parallèle ou en série pour optimiser la clarification de la solution.

A l'issue de cette étape, on réalise, de manière avantageuse mais non obligatoire, une mesure 7 de la teneur en chrome de la solution clarifiée en sortie de la cuve 4. De manière préférée, la mesure 7 est effectuée par échantillonnage et non en continu. En effet, les méthodes de mesure de la teneur en chrome, connues en soi, ne permettent pas d'obtenir des valeurs rapidement, dans des délais compatibles avec un procédé industriel. En variante, la mesure de la teneur en chrome n'est pas réalisée, par exemple lorsque la teneur en chrome de la solution clarifiée est connue du fait que la laitance initiale est homogène et régulière. Dans ce cas, on estime que la solution clarifiée contient essentiellement du chrome hexavalent Cr(VI). Il est à noter que la mesure en chrome hexavalent permet, par extrapolation, d'apprécier la teneur en chrome total.

L'étape suivante, qui peut être effectuée concomitamment à la mesure 7 de la teneur en chrome, est une mesure 8 du pH de la solution clarifiée, en aval de la cuve 4. Ici également, la mesure 8 peut être omise lorsque l'on estime que la solution clarifiée a un pH similaire à celui de la laitance initiale, le pH de cette dernière étant connu.

A l'issue de cette étape, la solution clarifiée est dirigée vers une cuve de réaction 9 dans laquelle la réduction du chrome hexavalent sera réalisée. La cuve 9 est d'un volume adapté pour traiter un volume de solution clarifiée correspondant sensiblement au volume de la cuve 4. Dans un mode de réalisation avantageux et non illustré, on utilise au moins deux cuves 9 en parallèle. Dans ce cas, le volume de la cuve 9 correspond à un demi-volume d'une cuve 4, dans le cas où l'on utilise deux cuves 9 en parallèles et de même volume. La cuve 9 est équipée d'un moyen d'agitation et d'un moyen de maintien en température, connus en soi. En variante, on conçoit que l'on utilise plus de deux cuves 9.

Dans cette cuve 9, un agent réducteur est ajouté. L'ajout de cet agent réducteur, en l'espèce un acide organique faible, préférentiellement de l'acide ascorbique ou un mélange à base d'acide ascorbique, est effectué sous forme liquide, à partir d'une cuve d'alimentation 10 définissant un organe d'ajout de l'agent réducteur. L'ajout de l'acide ascorbique réalisé sous forme liquide, de manière avantageuse, facilite la dispersion de l'agent réducteur et son action. Cette cuve 10 est pourvue de moyens assurant le maintien en solution homogène et à une température donnée de la solution d'acide ascorbique. Un moyen de dosage 11, tel qu'un débitmètre, permet d'adapter la quantité d'agent réducteur introduit dans la cuve 9. On conçoit que l'acide ascorbique, pour assurer une dispersion optimale de l'acide ascorbique dans la solution clarifiée, est avantageusement mis en solution dans une cuve, dite préparateur, positionnée préférentiellement à proximité de la cuve 9. En variante, l'acide ascorbique est introduit directement dans la cuve 9 sous forme pulvérulente. L'acide ascorbique présente l'avantage d'être un acide organique aisément dégradable dans le milieu naturel et considéré comme inoffensif pour les organismes vivants, au moins aux doses utilisées, cela tout en étant facile à produire à un cout maitrisé.

Dans tous les cas, quelle que soit la forme sous laquelle est introduit l'acide ascorbique dans la cuve de réaction 9, l'ajout à l'effluent est réalisé à une valeur du pH comprise entre la valeur initiale du pH de l'effluent initial et une valeur du pH compatible avec l'évacuation de l'effluent final à cette valeur de pH, sans ajustement supplémentaire du pH. En l'espèce, compte tenu de la réglementation, une telle valeur de pH permettant l'évacuation de l'effluent final est, au minimum, de 5,5. En effet, il convient de garder à l'esprit que l'acide ascorbique étant un acide faible et les laitances de béton ayant un effet tampon important, l'ajout de l'acide ascorbique n'a que peu, voire pas, d'effet sur la valeur initiale du pH. Le pH de la réduction en présence du seul acide ascorbique s'effectuerait donc à une valeur du pH similaire à celle de la laitance initiale, soit voisin de 12.

Or, des essais pratiqués par la Demanderesse ont montré, de manière inattendue, un effet important du pH sur la réduction du chrome hexavalent, en particulier sur la vitesse de réaction et le rendement de cette dernière, lorsque tous les autres paramètres, en particulier le ratio molaire entre le chrome hexavalent et l'acide ascorbique sont constants. Le tableau ci-après reprend les résultats obtenus.

| Ratio molaire Cr(VI) : L-acide ascorbique avec 0,21 mg/L de Cr(VI) dans la laitance initiale | 1:3 A* | 1:6 B* | 1:10 C* |
|---|---|---|---|
| pH > 8 et T=20°C | Pas de réduction | Pas de réduction | Pas de réduction |
| 7 < pH < 8 et T=20°C | Pas de réduction | >60% de réduction en <10 min | >70% de réduction en < 10 min |
| 6 < pH < 7 et T=20°C | Réduction lente | >80% du Cr(VI) réduit en <10 min | >90% du Cr(VI) réduit en <10 min |

| | | | |
|---|---|---|---|
| * équivalence en mase pour: A : 0,21 mg/L Cr(VI) et 0,63 mg/L d'acide ascorbique B : 0,21 mg/L Cr(VI) et 1,26 mg/L d'acide ascorbique C : 0,21 mg/L Cr(VI) et 2,10 mg/L d'acide ascorbique | | | |

La mesure du chrome hexavalent restant dans la laitance avant et après réduction a été effectuée par chromatographie ionique, selon une méthode adaptée pour fournir des valeurs fiables, en un temps inférieur à 15 min et avec un seuil de détection de 2 µg/L (0,002 mg/L) en Cr(VI) et un seuil de quantification de l'ordre de 8 µg/L (0,008 mg/L).

Il ressort des essais que, à partir d'un ratio molaire voisin de 1 : 10 et à un pH compris entre 5,5 et 7, la réduction de chrome hexavalent est considérée comme totale au bout d'environ 10 minutes. Il est à noter que le ratio molaire théorique optimal est de 1 : 3 mais la nature particulière des laitances fait que ce ratio n'est pas adapté, du fait d'autres espèces réductibles présentes en solution dans les laitances de béton.

La Demanderesse a également étudié l'influence d'autres paramètres sur la réaction de réduction du chrome hexavalent par l'acide ascorbique. En particulier, une baisse de la température de 10°C par rapport à la température des essais, qui est la température ambiante soit 20°C, diminue la vitessede réaction d'environ 20% et une diminution de 15°C par rapport à la température ambante de 20°C entraine une baisse de la vitesse de réaction de plus de 30%.

De même, une saturation en oxygène de la laitance initiale, étant entendu que l'oxygène est initialement à l'équilibre dans la laitance initiale (soit environ 10 mg/L), influe négativement sur la vitesse de réaction, cette dernière diminuant d'environ 15% par rapport à la vitesse de réaction lorsque l'oxygène est à l'équilibre. En d'autres termes, s'il est nécessaire d'agiter la laitance lors de la réaction, pour l'homogénéiser, il convient de ne pas aérer la laitance avec une agitation trop forte, sous peine d'abaisser le rendement réactionnel, par suroxygénation du milieu.

Des essais ont été également réalisés en utilisant comme agent réducteur de l'acide ascorbique associé à au moins un autre composé. En l'espèce, un coagulant tel qu'une polyamine, un polyacrylamide ou autre. La Demanderesse a constaté de manière inattendue que l'emploi d'un coagulant associé à l'acide ascorbique permet d'augmenter la vitesse de réduction. Le tableau ci-après reprend les résultats obtenus, à titre d'exemple, en utilisant comme coagulant une polyamine (coagulant N°1) et un poly (chlorure de diallyldiméthylammonium) (coagulant N°2).

| | % de chrome VI restant après un temps de réduction de : | | |
|---|---|---|---|
| Ratio molaire acide ascorbique/chrome : 1/3, pH : 7 | 15 min | 30 min | 45 min |
| Sans coagulant ni floculant | 30 % | 13 % | 5% |
| Avec coagulant (40 µL L⁻¹) | 15 min | 30 min | 45 min |
| coagulant N°1 | 19 % | 8 % | 3 % |
| coagulant N°2 | 24 % | 10 % | 4 v% |

Il y a donc un gain sensible et quantifiable d'efficacité par l'ajout du coagulant allant jusqu' à 30 % lors des 15 premières minutes, sur des tests effectués en laboratoire.

Il est possible d'associer d'autres composés, à l'acide ascorbique et au coagulant, par exemple un agent complexant du chrome (VI) pour réaliser la détection du chrome(VI) plus facilement grâce à une lecture par spectrophotométrie UV-visible ou un indicateur coloré permettant de contrôler le pH aisément à l'œil nu, sans nuire au gain sur la vitesse de réduction généré par l'association de l'acide ascorbique avec un coagulant. Il est également possible d'utiliser comme composé associé à l'acide ascorbique un ou un mélange d'un ou de plusieurs agent(s) réducteur(s) tel que le fer ferreux (Fe (II)), le fer zéro ou le bisulfite de sodium.

Un mode de mise en œuvre retenu, permettant un compromis entre, d'une part, le rendement et la vitesse de réaction et, d'autre part, le coût et l'utilisation industrielle d'un tel procédé, est effectué, préférentiellement mais non exclusivement, par l'ajout d'acide ascorbique à un ratio molaire de 1 : 10 et à un pH compris entre 5,5 et 7 et avec un coagulant à un ratio massique compris entre 1 : 0,002 et 1 : 25000.

La diminution du pH de la laitance initiale est obtenue par un agent d'ajustement du pH introduit dans la cuve de réaction 9 à partir d'un organe 12 d'ajustement du pH. Un tel agent d'ajustement du pH est connu en soi. Il s'agit, par exemple, de gaz carbonique ou, préférentiellement, d'un acide fort utilisable industriellement, tel que de l'acide sulfurique. On conçoit qu'un autre acide fort utilisable industriellement soit employé, par exemple de l'acide chlorhydrique. Ici, l'organe d'ajustement est une cuve 12 dans laquelle est stocké l'acide sulfurique ou, en variante, le gaz carbonique. Un moyen de dosage 13 de la quantité d'acide sulfurique, par exemple un débitmètre, permet de réguler la quantité d'acide introduite et donc d'ajuster précisément le pH de la solution clarifiée. Dans un autre mode de réalisation, on utilise ensemble l'acide sulfurique et le gaz carbonique.

L'ajout de l'agent d'ajustement du pH, donc de l'acide sulfurique, est avantageusement effectué simultanément à l'ajout de l'acide ascorbique, pour autant que le mélange des agents d'ajustement du pH et réducteur avec la solution clarifiée soit réalisé. En effet, la Demanderesse a constaté que l'ajustement du pH de 12 à une valeur comprise entre 5,5 et 7 est réalisé de façon suffisamment rapide pour que la réduction du chrome hexavalent par ajout d'acide ascorbique soit effectuée simultanément.

Dans un mode de réalisation non illustré, l'ajout de l'agent d'ajustement du pH est effectué préalablement à l'ajout de l'acide ascorbique. Dans ce cas, les ajouts d'acide sulfurique et d'acide ascorbique sont effectués dans la même cuve 9 de réaction, en décalé. En variante les ajouts sont effectués, en différé ou en simultané, dans deux cuves disposées en série.

A l'issue d'un temps de réaction prédéfini comme étant suffisant pour obtenir une réduction, dans l'exemple moins de 10 minutes, la laitance réduite est soutirée de la cuve 9 de réaction. Une dérivation 14 dirige la laitance réduite en amont du point de mesure 7 de la teneur en chrome. Ainsi, on contrôle la réaction de réduction et, si besoin, on réitère les ajouts d'agent d'ajustement du pH et/ou d'acide ascorbique de sorte à, d'une part, maintenir à une valeur préétablie le pH et, d'autre part, à amener la teneur en chrome hexavalent à une valeur prédéfinie, en accord avec la réglementation.

A l'issue de la réaction de réduction, le chrome hexavalent est réduit en chrome trivalent, peu soluble, présent sous forme de fines particules. La laitance finale, c'est-à-dire l'effluent clarifié non chargé en particules avec une teneur en chrome hexavalent au plus égale à celle exigée par la réglementation, est dirigée par une conduite 15 sur un moyen 16 de collecte du chrome trivalent, un filtre à charbon actif ou, avantageusement, un filtre à sable, avant son évacuation définitive par rejet dans le milieu naturel ou son recyclage.

En sortie du moyen 16, avant son évacuation, on réalise, de manière avantageuse, une mesure 18 en chrome hexavalent et une extrapolation en chrome total, à partir d'une analyse effectuée au préalable, sur la laitance décantée donc sur l'effluent initial débarrassé des particules, afin de valider l'évacuation dans le milieu naturel ou le recyclage de la laitance finale traitée, cela par rapport à la réglementation.

Le procédé comprend une étape supplémentaire consistant à ajouter également un agent d'ajustement du pH dans la laitance initiale, donc l'effluent initial chargé, en amont de son introduction dans la cuve 2 de décantation, typiquement sur la conduite 17 reliant la cuve 2 et le bac d'alimentation 1. Lors de cette étape, par ajout du même agent d'ajustement du pH que celui introduit dans la cuve de réaction, donc ici de l'acide sulfurique, on abaisse le pH de la laitance, initialement basique et voisin de 12, à une valeur comprise entre 7 et 8, donc proche de la neutralité. Dans ce cas, le chrome hexavalent qui n'est pas en solution mais adsorbé sur les particules solides de la laitance est libéré et mis en solution dans la phase aqueuse. De la sorte, on met en solution un maximum de chrome hexavalent, en vue de son traitement ultérieur par réduction avec l'acide ascorbique.

Dans un mode de réalisation non illustré, l'ajustement du pH en amont de la cuve 2 de décantation est réalisé par un agent d'ajustement différent de celui utilisé pour ajuster le pH dans la cuve 9 de réaction, par exemple un autre acide.

La figure 2 illustre un procédé qui est mis en œuvre sur un effluent initial ne comprenant qu'une phase liquide. Dans ce cas, la laitance initiale est peu ou pas chargée en particules mais, de facto, contient du chrome. Le procédé est similaire à celui décrit précédemment, à partir du traitement de l'effluent, après une décantation naturelle. Les références désignant des moyens et/ou des organes similaires sont multipliées par 10 par rapport aux références équivalentes de la figure 1.

On conçoit que l'installation de mise en œuvre du procédé est dans ce cas plus simple puisqu'il n'est plus nécessaire de prévoir ici un traitement des particules collectées après décantation. En effet, ce traitement a été soit réalisé au préalable soit n'est pas nécessaire, l'effluent initial étant par nature dépourvu de phase solide. Le procédé illustré à la figure 2 est, par exemple, soit réalisé en continu en sortie d'un bassin de décantation d'effluents initiaux soit en discontinu sur un volume donné d'effluent initial préalablement décanté. Ainsi, on peut envisager une installation propre à mettre en œuvre le procédé selon ce mode de réalisation pour traiter un effluent provenant d'un lieu distant.

En variante, une installation de mise en œuvre du procédé selon la figure 2 est mobile et utilisée pour une période donnée, in situ, par exemple en cas de pollution ponctuelle par du chrome présent dans un effluent liquide n'ayant pas de phase solide. Dans ce cas, l'installation est dimensionnée pour être aisément transportable par camion. En variante, l'installation est configurée pour avoir des dimensions correspondant à celles d'un container, permettant, par exemple, un transport par bateau.

Une alimentation 10 en effluent initial est effectuée dans l'exemple directement à partir de l'installation de production de l'effluent, selon la flèche F1. On conçoit qu'un bac d'alimentation soit prévu afin de régulariser l'alimentation en effluent. Ce dernier est introduit, dans une cuve de décantation 20. Cette cuve 20, de contenance inférieure à celle de la cuve 2, a pour objet de parfaire la décantation de l'effluent, en particulier lorsque ce dernier provient de bassins de décantation naturelle ou lagunage. En d'autres termes, il s'agit d'obtenir un effluent initial exempt de toute phase solide.

En sortie de la cuve 20, l'effluent est envoyé, par une conduite 21, selon la flèche F2, vers les bassins de décantation, lorsque, bien entendu, l'effluent est soutiré initialement de ces bassins.

Une mesure 200 de pH est effectuée sur l'effluent initial, en amont de la cuve 20. Après son passage dans la cuve 20, l'effluent est introduit dans une cuve 40, d'agitation et d'homogénéisation. Comme dans le cas illustré à la figure 1, un soutirage 50 permet d'envoyer l'effluent sur un organe de filtration 60, par exemple un filtre à sable, avant sa réintroduction dans la cuve 40. Des mesures 70, 80 respectivement du pH et de la teneur en chrome hexavalent sont effectuées sur l'effluent sortant de la cuve 40, en amont de son introduction dans une cuve 90 dans laquelle la réduction est réalisée, par l'ajout d'acide ascorbique provenant d'une cuve 100 d'alimentation en agent réducteur. Comme précédemment, l'acide ascorbique est ajouté à un pH compris entre le pH neutre et le pH initial, basique et voisin de 12, de l'effluent initial. La diminution du pH est obtenue par l'ajout, de préférence en simultanée, d'un agent d'ajustement provenant d'un organe d'ajustement 120 du pH.

L'organe d'ajustement 120 est également relié à l'alimentation 10, par une conduite 170, afin d'injecter l'agent d'ajustement du pH dans l'effluent initial, avant son passage dans la cuve 20, cela pour les mêmes raisons que celles décrites à la figure 1.

Une fois la réduction effectuée dans la cuve 90, avec les mêmes paramètres que pour le mode représenté à la figure 1, l'effluent final est évacué par une conduite 150 vers un organe de filtration 160, préalablement à son évacuation, à savoir son recyclage ou son rejet dans le milieu naturel. Si besoin, un contrôle, indiqué par la référence 161, de la teneur en chrome est réalisé en sortie de l'organe de filtration 160.

Les différents organes composant une installation propre à la mise en œuvre du procédé selon les modes de réalisation des figures 1 et 2 sont, au moins, une cuve d'homogénéisation 4 ; 40, une cuve 9 ; 90 de réaction et des organes 10, 12 ; 100, 120 d'ajout d'acide ascorbique et d'ajustement du pH et une cuve de décantation 2 ; 20 placée en amont de la cuve 9 ; 90 dans laquelle se fait la réduction.

Ces organes sont, en tant que tels, connus de l'homme du métier. Une telle installation peut comporter un nombre différent d'organes et/ou de dimensions différentes, selon la nature et le volume d'effluent à traiter. On conçoit qu'une telle installation peut comprendre d'autres éléments que ceux décrits. Il peut s'agir en particulier d'éléments en doubles, pour des questions de sécurité ou d'éléments de collecte de données complémentaires, par exemple sur le débit dans les conduites de l'installation, des sondes de température, de teneur en oxygène ou d'autres capteurs. Une telle installation comprend avantageusement divers organes de commande du procédé, ces organes étant adaptés pour permettre le suivi et la commande à distance de l'installation et la gestion du procédé.

La figure 3 illustre un autre procédé. Ici, l'effluent initial provient d'un bassin de décantation 101 d'une station de traitement de l'effluent. Il est donc majoritairement exempt de particules solides. Deux cuves, une d'homogénéisation 400 et une cuve complémentaire de décantation 401 de l'effluent sont montées en cascade. La cuve 400 est reliée, d'une part, à un filtre à sable 161 et d'autre part à une cuve de réaction 900. La cuve 900 est reliée à une cuve d'alimentation 121 en acide ascorbique et à une cuve d'alimentation 122 en acide sulfurique. La cuve 900 est également connectée à un second filtre à sable 162. Il est à noter qu'ici, le filtre 161 permet de renvoyer une partie de l'effluent filtré dans la cuve de décantation 401 et une partie dans le bassin de décantation 101. Ce dernier reçoit également, pour décantation supplémentaire un soutirage de la cuve 401 et un prélèvement du surnageant du bassin 101 est envoyé dans la cuve 401. Le fait d'avoir une décantation dite en cacade, par passage de l'effluent, si besoin plusieurs fois, de la station 101 à la cuve 401, permet de débarrasser au maximum l'effluent de ces particules solides donc de facto de collecter une partie du chrome présent. Le surnageant du contenu de la cuve 401, donc débarrassé autant que faire se peut de particules solides, passe, par exemple par débordement, dans la cuve 400.

De manière similaire, le filtre 162 évacue une partie de l'effluent une fois filtré en direction du bassin de décantation 101, l'autre partie étant évacué définitivement.

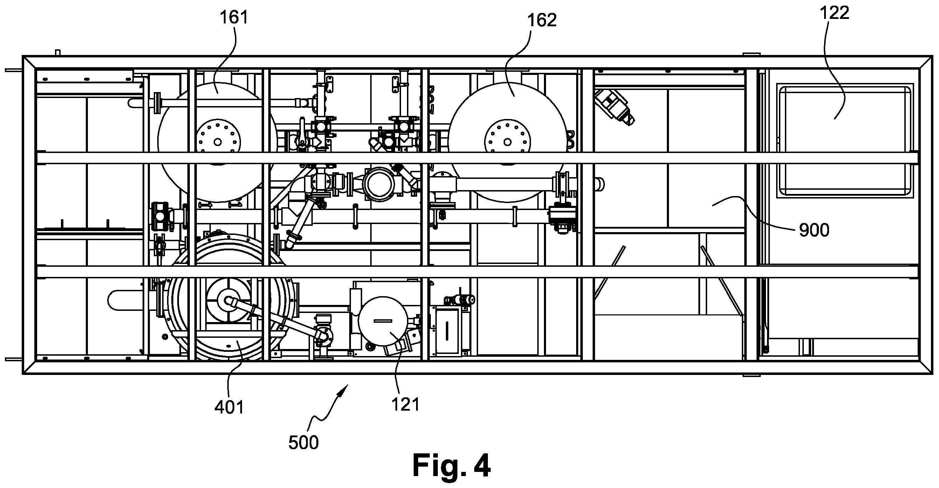

La figure 4 représente une installation de mise en œuvre du procédé. Une telle installation, également dénommé skid, a des dimensions lui permettant d'être aisement déplacée, par exemple sur un camion. Elle ne nécessite que des branchements en fluide et en électricité pour sa mise en service. Son emploi est donc aisé. Pour cela le skid 500 comprend un bâti métallique abritant au moins les différents organes nécessaires à la mise en œuvre du procédé.

En particulier, le skid 500 permet la mise en œuvre du procédé illustré à la figure 3. Les différents éléments constitutifs du skid 500, ici la cuve 401, les filtres 161, 162, les cuves d'alimentation 121, 122 respectivement en acide ascorbique et en acide sulfurique ainsi que la cuve de réaction 900 sont visibles. D'autres organes, tels que des pompes, des capteurs de pH, des débitmètres, des vannes et d'autres éléments, par exemple de sécurité sont prévus sur le skid 500. Dans tous les cas, les éléments du skid 500 sont adaptés, en nombre, type et dimensions, pour permettre la mise en œuvre du procédé selon les différents modes de réalisation. On conçoit qu'un tel skid puisse avoir des dimensions telles qu'il est aisément déplaçable, que ce soit, par exemple, sur un camion ou sous forme d'un container.

## Revendications

1. Procédé de diminution de la teneur en chrome, notamment en chrome hexavalent, présent dans un effluent liquide chargé en particules solides, dit effluent initial (1 ;10), comprenant au moins une étape de réduction (9 ; 90 ; 900) par l'ajout à l'effluent initial d'un acide organique faible (10 ; 100 ; 121) en quantité suffisante pour réduire le chrome hexavalent présent dans l'effluent initial à une valence inférieure, à savoir en chrome trivalent, ladite étape étant suivie d'une étape d'évacuation de l'effluent liquide ainsi traité dit effluent final, **caractérisé en ce qu'**il comprend au moins les étapes suivantes :
- ajuster le pH de l'effluent initial à une valeur proche de la neutralité, à savoir comprise entre 7 et 8,
- réaliser, préalablement à l'étape de réduction, une étape de collecte (2 ; 20 ; 101, 401) des particules solides présentes dans l'effluent initial, au moins par décantation,
- effectuer l'étape de réduction (9 ; 90 ; 900) après ajustement (12 ; 120 ; 122) du pH de l'effluent initial à une valeur du pH compatible avec une évacuation de l'effluent final à cette valeur de pH.

2. Procédé selon la revendication 1, **caractérisé en ce que** l'acide organique faible est l'acide ascorbique et **en ce que** l'ajustement (12 ; 120 ; 122) du pH est réalisé par de l'acide sulfurique.

3. Procédé selon la revendication 1, **caractérisé en ce que** l'acide organique faible est l'acide ascorbique et **en ce que** l'ajustement du pH est réalisé par du gaz carbonique.

4. Procédé selon une des revendications précédentes, **caractérisé en ce que** l'ajustement du pH de l'effluent final, est compris entre 5,5 et 7.

5. Procédé selon la revendication 1, **caractérisé en ce que** l'étape de décantation (2 ; 20 ; 101) est suivie d'une filtration (6 ; 60 ; 161).

6. Procédé selon l'une des revendications précédentes, **caractérisé en ce que**, avant l'étape de réduction (9 ; 90 ; 900), l'effluent est homogénéisé (4 ; 40 ; 400).

7. Procédé selon la revendication 6, **caractérisé en ce que**, après l'homogénéisation (4 ; 40 ; 400) et avant la réduction (9 ; 90), au moins une mesure de la teneur en chrome hexavalent (7 ; 70) et du pH (8 ; 80) est effectuée.

8. Procédé selon l'une des revendications précédentes, **caractérisé en ce que**, lors de l'étape de réduction (9 ; 90 ; 900), l'acide organique faible est associé à au moins un autre composé.

9. Procédé selon la revendication 8, **caractérisé en ce que** le composé associé à l'acide organique faible lors de l'étape de réduction est un coagulant.

10. Installation (500) de mise en œuvre du procédé selon l'une des revendications précédentes comprenant au moins une cuve (9 ; 90 ; 900) dans laquelle la réduction d'un effluent initial est réalisée, un organe (10 ; 100 ; 121) d'ajout d'un acide organique faible formant l'agent réducteur, l'organe (10 ; 100 ; 121) d'ajout étant relié à ladite cuve (9 ; 90 ; 900), **caractérisée en ce qu'**elle comprend également au moins un organe (12 ; 120 ; 122) d'ajustement du pH de l'effluent initial et au moins une cuve de décantation (2 ; 20 ; 401) placée en amont de la cuve (9 ; 90 ; 900) dans laquelle se fait la réduction.

11. Installation selon la revendication 10, **caractérisée en ce que** l'organe (12 ; 120) d'ajustement du pH est relié à la cuve (2 ; 20) de décantation.

12. Installation selon une des revendications 10 à 11, **caractérisée en ce qu'**elle comprend au moins un organe de filtration (6, 16 ; 60, 160) tel qu'un filtre à sable ou à charbon actif.

## Patentansprüche

1. Verfahren zur Verringerung des Chromgehalts, insbesondere von sechswertigem Chrom, das in einem mit festen Partikeln beladenen flüssigen Abwasser, sogenanntem anfänglichem Abwasser (1; 10), vorhanden ist, umfassend mindestens einen Schritt des Reduzierens (9; 90; 900) durch die Zugabe einer schwachen organischen Säure (10; 100; 121) in einer Menge zum anfänglichen Abwasser, die ausreicht, um das im anfänglichen Abwasser vorhandene sechswertige Chrom auf eine niedrigere Wertigkeit zu reduzieren, nämlich auf dreiwertiges Chrom, wobei auf den Schritt ein Schritt des Entfernens des so behandelten flüssigen Abwassers, sogenannten endgültigen Abwassers, folgt, **dadurch gekennzeichnet, dass** es mindestens die folgenden Schritte umfasst:
- Einstellen des pH-Werts des anfänglichen Abwassers auf einen Wert nahe der Neutralität, nämlich zwischen 7 und 8,
- Durchführen eines Schritts des Sammelns (2; 20; 101, 401) der im anfänglichen Abwasser vorhandenen festen Partikel vor dem Schritt des Reduzierens, mindestens durch Dekantieren,
- Durchführen des Schritts des Reduzierens (9; 90; 900) nach dem Einstellen (12; 120; 122) des pH-Werts des anfänglichen Abwassers auf einen pH-Wert, der mit einem Entfernen des endgültigen Abwassers bei diesem pH-Wert kompatibel ist.

2. Verfahren nach Anspruch 1, **dadurch gekennzeichnet, dass** die schwache organische Säure die Ascorbinsäure ist, und dass die Einstellung (12; 120; 122) des pH-Werts durch Schwefelsäure durchgeführt wird.

3. Verfahren nach Anspruch 1, **dadurch gekennzeichnet, dass** die schwache organische Säure die Ascorbinsäure ist, und dass die Einstellung des pH-Werts durch Kohlendioxid durchgeführt wird.

4. Verfahren nach einem der vorhergehenden Ansprüche, **dadurch gekennzeichnet, dass** die Einstellung des pH-Werts des endgültigen Abwassers zwischen 5,5 und 7 beträgt.

5. Verfahren nach Anspruch 1, **dadurch gekennzeichnet, dass** auf den Schritt des Dekantierens (2; 20; 101) eine Filtration (6; 60; 161) folgt.

6. Verfahren nach einem der vorhergehenden Ansprüche, **dadurch gekennzeichnet, dass** vor dem Schritt der Reduzierens (9; 90; 900) das Abwasser homogenisiert (4; 40; 400) wird.

7. Verfahren nach Anspruch 6, **dadurch gekennzeichnet, dass** nach der Homogenisierung (4; 40; 400) und vor der Reduktion (9; 90) mindestens eine Messung des Gehalts an sechswertigem Chrom (7; 70) und des pH-Werts (8; 80) durchgeführt wird.

8. Verfahren nach einem der vorhergehenden Ansprüche, **dadurch gekennzeichnet, dass** während des Schritts der Reduzierens (9; 90; 900) die schwache organische Säure mit mindestens einer anderen Verbindung assoziiert wird.

9. Verfahren nach Anspruch 8, **dadurch gekennzeichnet, dass** die während des Schritts der Reduzierens mit der schwachen organischen Säure assoziierte Verbindung ein Gerinnungsmittel ist.

10. Anlage (500) zum Implementieren des Verfahrens nach einem der vorhergehenden Ansprüche, umfassend mindestens einen Tank (9; 90; 900), wobei die Reduktion eines anfänglichen Abwassers durchgeführt wird, ein Element (10; 100; 121) zum Zugeben einer schwachen organischen Säure, die das Reduktionsmittel bildet, wobei das Element (10; 100; 121) zum Zugeben mit dem Tank (9; 90; 900) verbunden ist, **dadurch gekennzeichnet, dass** es auch mindestens ein Element (12; 120; 122) zum Einstellen des pH-Werts des anfänglichen Abwassers und mindestens einen Dekantierungstank (2; 20; 401) umfasst, der vorgelagert dem Tank (9; 90; 900) angeordnet ist, in dem die Reduktion erfolgt.

11. Anlage nach Anspruch 10, **dadurch gekennzeichnet, dass** das Element (12; 120) zur Einstellung des pH-Werts mit dem Dekantierungstank (2; 20) verbunden ist.

12. Anlage nach einem der Ansprüche 10 bis 11, **dadurch gekennzeichnet, dass** sie mindestens ein Filtrationselement (6, 16; 60, 160) wie einen Sand- oder Aktivkohlefilter umfasst.

## Claims

1. A method for reducing the chromium content, in particular the hexavalent chromium content, present in a liquid effluent loaded with solid particles, referred to as initial effluent (1; 10), comprising at least one reduction step (9; 90; 900) by adding a weak organic acid (10; 100; 121) to the initial effluent in an amount sufficient to reduce the hexavalent chromium present in the initial effluent to a lower valence, i.e. to trivalent chromium, said step being followed by a step of discharging the liquid effluent thus treated, referred to as final effluent, **characterised in that** it comprises at least the following steps:
- adjusting the pH of the initial effluent to a value close to neutrality, i.e. between 7 and 8,
- carrying out, prior to the reduction step, a step (2; 20; 101, 401) of collecting the solid particles present in the initial effluent, at least by settling,
- performing the reduction step (9; 90; 900) after adjustment (12; 120; 122) of the pH of the initial effluent to a pH value compatible with discharging the final effluent at this pH value.

2. The method according to claim 1, **characterised in that** the weak organic acid is ascorbic acid and **in that** the pH adjustment (12; 120; 122) is carried out using sulphuric acid.

3. The method according to claim 1, **characterised in that** the weak organic acid is ascorbic acid and **in that** the pH adjustment is carried out using carbon dioxide.

4. The method according to one of the preceding claims, **characterised in that** the pH adjustment of the final effluent is between 5.5 and 7.

5. The method according to claim 1, **characterised in that** the settling step (2; 20; 101) is followed by a filtration (6; 60; 161).

6. The method according to one of the preceding claims, **characterised in that** the effluent is homogenised (4; 40; 400) before the reduction step (9; 90; 900).

7. The method according to claim 6, **characterised in that**, after the homogenisation (4; 40; 400) and before the reduction (9; 90), at least one measurement of the content of hexavalent chromium (7; 70) and of the pH (8; 80) is performed.

8. The method according to one of the preceding claims, **characterised in that** the weak organic acid is combined with at least one other compound during the reduction step (9; 90; 900).

9. The method according to claim 8, **characterised in that** the compound associated with the weak organic acid during the reduction step is a coagulant.

10. A device (500) for implementing the method according to one of the preceding claims, comprising at least one tank (9; 90; 900) in which the reduction of an initial effluent is carried out, a member (10; 100; 121) for adding a weak organic acid forming the reducing agent, the addition member (10; 100; 121) being connected to said tank (9; 90; 900), **characterised in that** it also comprises at least one member (12; 120; 122) for adjusting the pH of the initial effluent and at least one settling tank (2; 20; 401) placed upstream of the tank (9; 90; 900) in which the reduction takes place.

11. The device according to claim 10, **characterised in that** the pH adjustment member (12; 120) is connected to the settling tank (2; 20).

12. The device according to one of claims 10 and 11, **characterised in that** it comprises at least one filtration member (6, 16; 60, 160) such as a sand or activated carbon filter.
